# EUROPÄISCHE PATENTSCHRIFT

(11) **EP 4 157 804 B1**
(45) Veröffentlichungstag und Bekanntmachung des Hinweises auf die Patenterteilung: **16.09.2026**
(21) Anmeldenummer: 20730216.7
(22) Anmeldetag: 28.05.2020
(51) Int. Cl.: C04B 28/04, C04B 28/06, C04B 40/00

(54) **VERWENDUNG VON IN WASSER REDISPERGIERBAREN POLYMERPULVERN FÜR HYDRAULISCH ABBINDENDE BAUSTOFFTROCKENFORMULIERUNGEN**
USE OF WATER-REDISPERSIBLE POLYMER POWDERS FOR HYDRAULIC SETTING, DRY FORMULATIONS OF CONSTRUCTION MATERIALS
UTILISATION DE POUDRES POLYMÈRES REDISPERSIBLES DANS L'EAU POUR FORMULATIONS SÈCHES À PRISE HYDRAULIQUE DE MATÉRIAUX DE CONSTRUCTION

(43) Veröffentlichungstag der Anmeldung: 05.04.2023
(73) Patentinhaber: Wacker Chemie AG, 81671 München (DE)
(72) Erfinder: BANNWARTH, Markus, 84489 Burghausen (DE)
(74) Vertreter: Ege, Markus
(86) Internationale Anmeldenummer: PCT/EP2020/064865
(87) Internationale Veröffentlichungsnummer: WO 2021/239234

(56) Entgegenhaltungen:
- EP-A1- 1 897 926
- WO-A1-2004/092094
- WO-A1-2017/178422
- CN-A- 103 497 290

## Beschreibung

Die Erfindung betrifft die Verwendung von Vinylacetat-Ethylen und/oder Styrol-(Meth)Acrylsäureester-Copolymeren in Form von in Wasser redispergierbaren Pulvern zur Herstellung von hydraulisch abbindenden Baustofftrockenformulierungen, wie Fliesenkleber, Dichtschlämme, Selbstverlaufsmassen oder Armierungsmassen.

Baustofftrockenformulierungen enthalten üblicherweise hydraulisch abbindende Bindemittel, wie Zement, sowie Füllstoffe, Polymerisate in Form von in Wasser redispergierbaren Pulvern (Polymerpulver) und gegebenenfalls weitere Additive, wie beispielsweise beschrieben in der GB1771962, und finden Anwendung beispielsweise als Fliesenkleber, Fugenfüller, Spachtelmassen, Dichtschlämme, Putze oder Estriche. Die Baustofftrockenformulierungen werden vor ihrer Applikation mit Wasser angemacht und dadurch in Frischmörtel, das heißt in ihre anwendungsfertige Form überführt.

Polymerisate in Form von in Wasser redispergierbaren Pulvern bezeichnen bekanntermaßen Pulverzusammensetzungen, welche durch Trocknen der entsprechenden wässrigen Polymerdispersionen in Gegenwart von Trocknungshilfsmitteln zugänglich werden. Auf Grund dieses Herstellungsprozesses wird das feinteilige Polymerharz der Dispersion mit üblicherweise wasserlöslichen Trocknungshilfsmitteln umhüllt. Bei der Trocknung wirkt das Trocknungshilfsmittel wie ein Mantel, welcher das irreversible Zusammenkleben der Teilchen verhindert. Beim Redispergieren der Polymerpulver in Wasser löst sich das Trocknungshilfsmittel, und es bildet sich eine wässrige Redispersion, in der möglichst wieder die ursprünglichen Polymerteilchen (Primärpolymerpartikel) vorliegen (Schulze J. in TIZ, No. 9, 1985).

Mit Polymerpulvern können beispielsweise die kohäsiven oder adhäsiven Eigenschaften von ausgehärteten Bauprodukten verbessert werden, insbesondere mechanische Festigkeiten, wie (Biege)Zugfestigkeiten, oder die Haftung der Baustoffprodukte auf Untergründen, beispielsweise auf mineralischen Untergründen oder Dämmmaterialien, wie Polystyrolplatten. Hierzu ist es erforderlich, dass die Polymere in der Anwendung untereinander und mit den Füllstoffen und anorganischen Bindemitteln verfilmen. Um eine homogene Verfilmung der Polymere in den Baustoffprodukten zu erreichen, müssen die Polymerpulver auf Zugabe von Wasser möglichst vollständig und feinteilig redispergiert werden. Andernfalls liegen die Polymerpulver in den Baustoffprodukten als bloßer grobteiliger organischer Füllstoff vor.

Das vollständige Redispergieren der Polymerpulver in Wasser stellt jedoch eine Herausforderung dar und bereitet insbesondere nach zunehmender Lagerdauer der Polymerpulver oder nach Lagern bei höheren Temperaturen oder höherer Luftfeuchtigkeit Probleme, also nach Lagern unter feuchten, warmen oder gar feuchtwarmen, wie tropischen Bedingungen. Aber auch nach Lagern in gemäßigten Klimazonen können Probleme beim Redispergieren auftreten, beispielsweise wenn im jahreszeitlichen Wechsel zeitweise auch feuchte und/oder feuchtwarme Bedingungen herrschen oder die Polymerpulver für längere Zeit gelagert werden. Während des Lagerns sollen die Polymerpulver möglichst wenig untereinander verfilmen beziehungsweise verblocken, ihre Rieselfähigkeit soll möglichst keine Einbuße erleiden und auf Zugabe von Wasser sollen aus den Polymerpulvern wieder Primärpolymerpartikel freigesetzt werden. All diese Probleme sind im Falle weicher Polymere, wie Vinylacetat-Ethylen-Copolymere oder entsprechende Styrol-(Meth)Acrylsäureester-Copolymere, besonders ausgeprägt. Solche Copolymere haben allgemein niedrige Glasübergangstemperaturen und verfilmen bei der Applikationstemperatur besonders effizient. Aufgrund der niedrigen Glasübergangstemperaturen, welche zumeist unterhalb der üblichen Lagertemperaturen liegen, neigen solche Copolymere jedoch auch dazu, bereits im Polymerpulver vermehrt zum Verfilmen beziehungsweise Verblocken. In diesen Fällen stellt das Bereitstellen von vollständig in Wasser redispergierbaren Polymerpulvern eine besondere Herausforderung dar.

Um die Redispergierbarkeit von Polymerpulvern zu verbessern, sind im Laufe der letzten Jahrzehnte schon unterschiedlichste Ansätze unternommen worden. So lehrt beispielsweise die EP 0770640 den Zusatz von Polyelektrolyten als Trocknungshilfsmittel. Die EP1065226 hat Emulgator-stabilisierte, Schutzkolloid-freie Redispersionspulver auf Basis von Vinylaromat-Copolymerisaten zum Gegenstand. Die DE2312408 befasst sich mit Emulgator-stabilisierten Polymerpulvern von Carbonsäure-Einheiten enthaltenden Basispolymeren, die vor der Trocknung mit sechsgliedrigen, carbocyclischen Verbindungen mit zwei vicinalen Carboxylsubstituenten versetzt und auf einen alkalischen pH-Wert eingestellt werden. Solche Additive beeinflussen allerdings das Abbindeverhalten von hydraulisch abbindenden Bindemitteln und sind deswegen zum Modifizieren von allgemein einsetzbaren Polymerpulvern für Baustoffformulierungen verpönt. Die Polymere der DE 2312408 sind auch nach Verfilmen wieder redispergierbar in Wasser. Zur Verbesserung der Redispergierbarkeit von Styrol-Butadien- oder Acrylnitril-Butadien-Copolymeren lehrt die EP0989154, Carbonsäuremonomere in die Basispolymere einzupolymerisieren und als Trocknungshilfsmittel Alkalisalze von N-Alkylsulfosuccinamat-Maleinsäure-Copolymeren zuzusetzen. Die Polymerpulver wurden mit den Antiblockmitteln Kreide, Talkum, Diatomeenerde, Kaolin, Silikate, Kieselsäure oder Calciumcarbonat modifiziert, welche bekanntermaßen wasserunlöslich sind. Die EP0078449 empfiehlt für Polymere mit niedrigen Erweichungspunkten den Einsatz von Vinylpyrrolidon-Vinylacetat-Polymeren oder (Erd)Alkalisalzen von Naphthalinsulfonsäure-Formaldehydkondensaten als Trocknungshilfsmittel. Die EP3230394 hat wässrige Polymerdispersionen und wässrige Klebstoffformulierungen zum Ziel, die beim Lagern keine wesentliche Änderung ihrer Viskosität erleiden sollen. Hierzu ist es für EP3230394 essentiell, den Polymerdispersionen polyfunktionelle Alkohole sowie zusätzlich organische oder anorganische Salze von (Erd)Alkalimetallen, insbesondere Lithiumchlorid, zuzusetzen. Die Klebstoffe dienen insbesondere als Holzleim oder Papierklebstoffe oder zum Verkleben sonstiger Verpackungsmaterialien. Polyfunktionelle Alkohole verzögern aber bekanntermaßen das Abbinden von hydraulisch abbindenden Bindemitteln. Die EP1615861 strebt abbindebeschleunigte Mörtel an und lehrt hierfür den Zusatz von Polymerpulverzusammensetzungen, die mit (Erd)Alkalisalzen anorganischer oder organischer Säuren modifiziert sind. Die EP 1897926 befasst sich mit wässrigen oder in Wasser redispergierbaren Adhäsiven, die wasserunlösliche und/oder wasserslösliche Polymere und Polyalkylenpolyamine sowie gegebenenfalls wasserlösliche Salze enthalten, für nicht-zementäre Anwendungen, beispielsweise zum Verkleben von Papier oder Karton, zur Herstellung von Nonwovens oder zum Verkleben von Zigarettenpapier, insbesondere für die maschinelle Düsenapplikation. Die GB929704 beschreibt Polymerpulver auf Basis von Acrylaten oder Polyvinylacetaten mit dem Ziel, den Durchsatz in Sprühtrocknern durch Erhöhung der Sprühtemperatur zu steigern sowie die Lagerstabilität von Polymerpulvern zu verbessern. Polyvinylacetate sind bekanntermaßen harte Polymere und haben eine Glasübergangstemperatur von über 30°C. Zu diesem Zweck empfiehlt GB1771962, den Sprühspeisen entweder inerte Feststoffe, hydrophile Kolloide oder lösliche Salze oder Kombinationen aus inerten Feststoffen und hydrophilen Kolloiden oder inerten Feststoffen und löslichen Salzen zuzusetzen. WO2017/178422 lehrt Verfahren, in denen wasserlösliche Salze von multivalenten Metallen, wie Erdalkalimetalle, Aluminium, Zirkon, Eisen oder Zink, und zusätzlich wasserlösliche Salze von Aluminaten, Silikaten, Boraten, Sulfaten oder Carbonaten in wässrige Polymerdispersionen eingebracht werden und anschließend getrocknet wird, wobei die unterschiedlichen anorganischen Salze eine dichte Schale auf den Polymerpartikeln ausbilden, die nur in alkalischem Medium oder in Folge mechanischer Beanspruchung aufgelöst wird.

Die Polymerisation von ethylenisch ungesättigten Monomeren wird üblicherweise mittels Initiatoren, beispielsweise auch Alkalipersulfaten, initiiert. Dabei Zerfallen die Initiatoren bekanntermaßen in Radikale, die sich an ethylenisch ungesättigte Monomere addieren und dadurch das Polymerkettenwachstum initiieren. In Folge dessen sind die Initiatoren über kovalente Bindungen an die im Zuge der Polymerisation gebildeten Polymere angebunden und liegen somit in der Polymerdispersion nicht als niedermolekulare Verbindungen, wie Alkalisulfate, vor.

Vor diesem Hintergrund bestand die Aufgabe, für Baustofftrockenformulierungen Vinylacetat-Ethylen- und/oder Styrol-(Meth)Acrylsäureester-Copolymere in Form von in Wasser redispergierbaren Pulvern mit verbesserter Lagerstabilität bereitzustellen, vorzugsweise auch nach Lagerung der Polymerpulver unter feuchten, warmen oder feuchtwarmen Bedingungen. Dabei sollten die Polymerpulver vorzugsweise frei von Additiven sein, die stark in das Abbinden von Frischmörteln eingreifen.

Überraschenderweise wurde die Aufgabe gelöst, indem die Polymerpulver hergestellt wurden durch Trocknen von wässrigen Dispersionen von Ethylen-Vinylacetat- und/oder Styrol-(Meth)-Acrylsäureester-Copolymeren, die wasserlösliche, anorganische Salze enthalten ausgewählt aus der Gruppe bestehend aus Alkalisulfaten.

Gegenstand der Erfindung ist die Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen, dadurch gekennzeichnet, dass die Lagerstabilität der Schutzkolloid stabilisierten Vinylacetat-Ethylen- und/oder Styrol-(Meth)Acrylsäureester-Copolymere in Form von in Wasser redispergierbaren Pulvern verbessert wird, indem wässrige Dispersionen enthaltend Schutzkolloid stabilisierte Vinylacetat-Ethylen- und/oder Styrol-(Meth)Acrylsäureester-Copolymere, ein oder mehrere wasserlösliche, anorganische Salze und ein oder mehrere Trocknungshilfsmittel getrocknet werden,
wobei die wasserlöslichen, anorganischen Salze ausgewählt werden aus der Gruppe bestehend aus Alkalisulfaten und die Trocknungshilfsmittel ausgewählt werden aus der Gruppe umfassend Polyvinylalkohole, Polyvinylacetale, nicht-ionische Polyvinylpyrrolidone, nicht-ionische Poly(meth)acrylamide, Polysaccharide und Proteine.

Die erfindungsgemäß verwendeten Schutzkolloid stabilisierten Vinylacetat-Ethylen- und/oder Styrol-(Meth)Acrylsäureester-Copolymere in Form von in Wasser redispergierbaren Pulvern werden im Folgenden auch als Polymerpulver abgekürzt. Die Vinylacetat-Ethylen- und/oder Styrol-(Meth)Acrylsäureester-Copolymere werden im Folgenden auch abgekürzt Copolymere genannt. Die wasserlöslichen, anorganischen Salze weisen eine Wasserlöslichkeit auf von vorzugsweise ≥ 1 g pro Liter Wasser, besonders bevorzugt ≥ 3 g pro Liter Wasser und am meisten bevorzugt ≥ 10 g pro Liter Wasser, je unter Normalbedingungen (23/50) nach DIN50014. Diese Angaben beziehen sich vorzugsweise auf neutrale pH-Werte.

Beispiele für Alkalisulfate sind Lithiumsulfat (Li₂SO₄), Natriumsulfat (Na₂SO₄) und Kaliumsulfat (K₂SO₄). Bevorzugt sind Natriumsulfat und Kaliumsulfat. Am meisten bevorzugt ist Natriumsulfat.

Bevorzugt enthalten die wässrigen Dispersionen und/oder die Polymerpulver 0,1 bis 20 Gew.-%, mehr bevorzugt 0,3 bis 10 Gew.-%, noch mehr bevorzugt 0,5 bis 5 Gew.-%, besonders bevorzugt 0,8 bis 4 Gew.-% und am meisten bevorzugt 1 bis 3 Gew.-% an wasserlöslichen, anorganischen Salzen, bezogen auf das Gesamtgewicht der Copolymere.

Bei den Trocknungshilfsmitteln handelt es sich allgemein um Polyvinylalkohole, Polyvinylacetale, nicht-ionische Polyvinylpyrrolidone, nicht-ionische Poly(meth)acrylamide, Polysaccharide und Proteine. Die genannten Trocknungshilfsmittel sind mittels des Fachmanns bekannter Verfahren zugänglich. Bevorzugt sind nicht-ionische Trocknungshilfsmittel. Die nicht-ionischen Trocknungshilfsmittel, die nicht-ionischen Polyvinylpyrrolidone und die nicht-ionischen Poly(meth)acrylamide enthalten allgemein keine ionischen Monomer-Einheiten und tragen allgemein keine ionischen Gruppen, insbesondere keine Ammonium-, Carbonsäure-, Sulfonsäure-Gruppen. Die nicht-ionischen Polyvinylpyrrolidone bestehen vorzugsweise aus Vinylpyrrolidon-Einheiten. Die nicht-ionischen Poly(meth)acrylamide bestehen vorzugsweise aus (Meth)Acrylamid-Einheiten.

Als Trocknungshilfsmittel bevorzugt sind Polyvinylalkohole; Polyvinylacetale; Polysaccharide, insbesondere in wasserlöslicher Form wie Stärken (Amylose und Amylopectin), Cellulosen oder deren Derivate, wie Carboxymethyl-, Methyl-, Hydroxyethyl-, Hydroxypropyl-Derivate; und Proteine wie Casein oder Caseinat, Sojaprotein und Gelatine. Besonders bevorzugt sind Polyvinylalkohole. Am meisten bevorzugt wird neben Polyvinylalkoholen kein weiteres Trocknungshilfsmittel eingesetzt.

Bei Polyvinylalkoholen kann es sich um teilverseifte oder vollverseifte Polyvinylalkohole handeln, beispielsweise mit einem Hydrolysegrad von 80 bis 100 Mol-%, insbesondere um teilverseifte Polyvinylalkohole mit einem Hydrolysegrad von 80 bis 95 Mol-%, vorzugsweise 85 bis 92 Mol-%. Die Polyvinylalkohole haben eine Höpplerviskosität, in 4 %-iger wässriger Lösung von vorzugsweise 1 bis 30 mPa·s (Methode nach Höppler bei 20°C, DIN 53015). Bevorzugt sind auch teilverseifte, hydrophob modifizierte Polyvinylalkohole, insbesondere mit einem Hydrolysegrad von 80 bis 95 Mol-% und einer Höpplerviskosität, in 4 %-iger wässriger Lösung von vorzugsweise 1 bis 30 mPa·s. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung, von 3 bis 15 mPa·s (Methode nach Höppler bei 20°C, DIN 53015).

Bevorzugt enthalten die wässrigen Dispersionen und/oder die Polymerpulver 1 bis 30 Gew.-%, besonders bevorzugt 2 bis 20 Gew.-% und am meisten bevorzugt 3 bis 15 Gew.-% an Trocknungshilfsmitteln, bezogen auf das Gesamtgewicht der Copolymere.

Die Vinylacetat-Ethylen-Copolymere können neben Vinylacetat und Ethylen auf einem oder mehreren weiteren Monomeren basieren, beispielsweise ausgewählt aus der Gruppe umfassend Vinylester von Carbonsäuren mit 3 bis 15 C-Atomen, Methacrylsäureester oder Acrylsäureester von Carbonsäuren mit unverzweigten oder verzweigten Alkoholen mit 1 bis 15 C-Atomen, Propylen, Diene, Vinylaromaten und Vinylhalogenide.

Bevorzugte Vinylester von Carbonsäuren mit 3 bis 15 C-Atomen sind Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell).

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugtes Dien ist 1,3-Butadien. Bevorzugte Vinylaromaten sind Styrol und Vinyltoluol. Ein bevorzugtes Vinylhalogenid ist Vinylchlorid.

Bei den (Meth)Acrylsäureester-Monomereinheiten der Styrol-(Meth)Acrylsäureester-Copolymere handelt es sich beispielsweise um Methacrylsäureester oder Acrylsäureester von Carbonsäuren mit unverzweigten oder verzweigten Alkoholen mit 1 bis 15 C-Atomen. Hierbei sind die weiter oben genannten Methacrylsäureester oder Acrylsäureester bevorzugt und besonders bevorzugt.

Die Styrol-(Meth)Acrylsäureester-Copolymere können neben Styrol und (Meth)Acrylsäureestern auf einem oder mehreren weiteren Monomeren basieren, beispielsweise ausgewählt aus der Gruppe umfassend Vinylester von Carbonsäuren mit 2 bis 15 C-Atomen, Olefine und Diene, Vinyltoluol und Vinylhalogenide. Hierbei sind die oben genannten Vinylester von Carbonsäuren mit 3 bis 15 C-Atomen, Diene, Vinylhalogenide sowie Vinylacetat, Ethen und Propylen bevorzugt.

Gegebenenfalls können noch ein oder mehrere Hilfsmonomere in die Vinylacetat-Ethylen- und/oder Styrol-(Meth)Acrylsäureester-Copolymere einpolymerisiert sein. Vorzugsweise sind bis zu 20 Gew.-%, besonders bevorzugt 0,1 bis 10 Gew.-%, bezogen auf das Gesamtgewicht der Copolymere, an Hilfsmonomeren in die Copolymere einpolymerisiert. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acry-loxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere Beispiele sind auch Vinylether, wie Methyl-, Ethyl- oder iso-Butylvinylether.

In einer alternativen, bevorzugten Ausführungsform sind keine ethylenisch ungesättigte Mono- und Dicarbonsäuren, keine Mono- und Diester der Fumarsäure und Maleinsäure, kein Maleinsäureanhydrid und/oder keine ethylenisch ungesättigte Sulfonsäuren in die Copolymere einpolymerisiert. Besonders bevorzugt sind keine Hilfsmonomere in die Copolymere einpolymerisiert.

Vinylacetat-Ethylen-Copolymere sind bevorzugt.

Beispiele für geeignete Copolymere sind Mischpolymerisate von Vinylacetat mit Ethylen, Mischpolymerisate von Vinylacetat mit Ethylen und einem oder mehreren weiteren, von Vinylacetat verschiedenen Vinylestern, Mischpolymerisate von Vinylacetat mit Ethylen und Acrylsäureester, Mischpolymerisate von Vinylacetat mit Ethylen und Vinylchlorid und Styrol-(Meth)Acrylsäureester-Copolymerisate.

Bevorzugt werden Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 3 bis 12 C-Atomen im Carbonsäurerest wie Vinylpropionat, Vinyllaurat, Vinylester von alpha-verzweigten Carbonsäuren mit 5 bis 13 C-Atomen wie VeoVa9R, VeoVa10R, VeoVa11R; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 40 Gew.-% Ethylen, 1 bis 30 Gew.-% Vinyllaurat oder Vinylester einer alpha-verzweigten Carbonsäure mit 5 bis 13 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat; Mischpolymerisate mit Vinylacetat, 1 bis 40 Gew.-% Ethylen und 1 bis 60 Gew.-% Vinylchlorid; wobei die Mischpolymerisate jeweils noch die genannten Hilfsmonomere vorzugsweise in den genannten Mengen enthalten können, und sich die Angaben in Gew.-% auf jeweils 100 Gew.-% aufaddieren.

Bevorzugt werden auch Styrol-(Meth)Acrylsäureester-Copolymerisate von Styrol mit einem oder mehreren Monomeren aus der Gruppe umfassend Methylmethacrylat, Methylacrylat, Ethylacrylat, Propylacrylat, n-Butylacrylat, 2-Ethylhexylacrylat; wobei die Copolymerisate jeweils noch die genannten Hilfsmonomere vorzugsweise in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im Allgemeinen eine Glasübergangstemperatur Tg von -50°C bis +25°C, vorzugsweise -30°C bis +20°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Polymerpulver enthalten vorzugsweise 50 bis 90 Gew.-% an Vinylacetat-Ethylen- und/oder Styrol-(Meth)Acrylsäureester-Copolymeren, bezogen auf das Gesamtgewicht der Polymerpulver.

Beispiele für Schutzkolloide sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Als Schutzkolloide sind dieselben Ausführungsformen bevorzugt, besonders bevorzugt und am meisten bevorzugt, die für die Trocknungshilfsmittel entsprechend aufgeführt sind. Am meisten bevorzugt werden als Schutzkolloide ausschließlich Polyvinylalkohole eingesetzt. Am meisten bevorzugt ist auch, dass die Schutzkolloide und die Trocknungshilfsmittel identisch sind.

Die Polymerpulver enthalten vorzugsweise 1 bis 20 Gew.-%, besonders bevorzugt 2 bis 15 Gew.-% an Schutzkolloiden, bezogen auf das Gesamtgewicht der Polymerpulver.

Die Herstellung der Copolymere erfolgt vorzugsweise nach dem Emulsionspolymerisationsverfahren. Die Emulsionspolymerisation erfolgt üblicherweise in wässrigem Medium. Die Polymerisationstemperatur beträgt im Allgemeinen 40°C bis 100°C, vorzugsweise 60°C bis 95°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation kann mit den für die Emulsionspolymerisation gebräuchlichen Redox-Initiator-Kombinationen erfolgen. Der Monomerumsatz kann wie üblich mit der Initiatordosierung gesteuert werden. Die Initiatoren werden im Allgemeinen insgesamt so zudosiert, dass eine kontinuierliche Polymerisation gewährleistet ist. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Azobisisobutyronitril. Bevorzugt werden die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt.

Geeignete Reduktionsmittel sind beispielsweise die Sulfite und Bisulfite der Alkalimetalle und von Ammonium, wie Natriumsulfit, die Derivate der Sulfoxylsäure wie Zink- oder Alkaliformaldehydsulfoxylate, beispielsweise Natriumhydroxymethansulfinat (Brüggolit), und (Iso-)Ascorbinsäure. Bevorzugt werden Natriumhydroxymethansulfinat, und (Iso-)Ascorbinsäure. Die Reduktionsmittelmenge beträgt vorzugsweise 0,015 bis 3 Gew.-%, bezogen auf das Gesamtgewicht der Monomere.

Die genannten Oxidationsmittel, insbesondere die Salze der Peroxodischwefelsäure sowie Wasserstoffperoxid, können auch alleinig als thermische Initiatoren eingesetzt werden.

Zur Steuerung des Molekulargewichts können während der Emulsionspolymerisationsverfahren regelnde Substanzen eingesetzt werden. Falls Regler eingesetzt werden, werden diese üblicherweise in Mengen zwischen 0,001 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäuren oder deren Alkalisalze, Mercaptopropionsäuremethylester, Isopropanol, Phosphonsäure oder deren Derivate, Phosphinsäure oder deren Derivate und Acetaldehyd. Vorzugsweise wird 2-Mercaptopropionsäure oder tert.-Dodecylmercaptan verwendet.

Zur Stabilisierung können Schutzkolloide, gegebenenfalls in Kombination mit Emulgatoren, eingesetzt werden. Im Emulsionspolymerisationsverfahren kann auch in Gegenwart von Emulgatoren polymerisiert werden. Bevorzugte Mengen an Emulgatoren sind 1 bis 7 Gew.-%, bezogen auf das Gesamtgewicht der Monomere. Beispiele für Emulgatoren sind anionische, kationische oder nichtionische Emulgatoren, wie anionische Tenside, insbesondere Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Besonders bevorzugt wird in Abwesenheit von Emulgatoren polymerisiert. Die wässrigen Dispersionen und/oder die Polymerpulver enthalten vorzugsweise keine Emulgatoren.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die so erhältlichen Copolymere liegen vorzugsweise in Form von Schutzkolloid stabilisierten, wässrigen Dispersionen vor.

Die wässrigen Dispersionen haben einen Feststoffgehalt von vorzugsweise 30 bis 75 Gew.-%, besonders bevorzugt von 45 bis 60 Gew.-%.

Der Zusatz der wasserlöslichen, anorganischen Salze kann vor, während oder vorzugsweise nach der Herstellung der Copolymere mittels Polymerisation erfolgen. Es können auch chemische Substanzen eingesetzt werden, die sich durch chemische Reaktion in wasserlösliche, anorganische Salze umwandeln.

Beispielsweise können die wasserlöslichen, anorganischen Salze vor der Initiierung der Polymerisation mit den ethylenisch ungesättigten Monomeren vermischt werden. Alternativ dazu können die wasserlöslichen, anorganischen Salze während der Polymerisation der ethylenisch ungesättigten Monomere zugegeben werden. Ebenso kann ein Teil der wasserlöslichen, anorganischen Salze den ethylenisch ungesättigten Monomeren vor der Initiierung der Polymerisation beigemischt werden und der restliche Teil der wasserlöslichen, anorganischen Salze während der Polymerisation der ethylenisch ungesättigten Monomere zugegeben werden.

Bevorzugt erfolgt die Zugabe der wasserlöslichen, anorganischen Salze nach Abschluss der Polymerisation zur entsprechenden Polymerdispersion. Besonders bevorzugt erfolgt die Zugabe der wasserlöslichen, anorganischen Salze vor der Trocknung der wässrigen Polymerdispersion. Dazu werden vorzugsweise ein oder mehrere wasserlösliche, anorganische Salze den wässrigen Polymerdispersionen zugegeben, um anschließend die so erhaltenen Mischungen zu trocknen. Vorzugsweise werden während der Trocknung der wässrigen Polymerdispersionen keine wasserlöslichen, anorganischen Salze zugegeben.

Den so erhaltenen wässrigen Dispersionen wird im Allgemeinen Trocknungshilfsmittel zugesetzt. In der Regel wird die Trocknungshilfsmittel in einer Gesamtmenge von 0,5 bis 30 Gew.-%, insbesondere 5 bis 20 Gew.-%, bezogen auf den Feststoffgehalt der wässrigen Dispersion, eingesetzt. Die Gesamtmenge an Trocknungshilfsmittel und Schutzkolloid vor dem Trocknungsvorgang beträgt vorzugsweise 1 bis 30 Gew.-%, bezogen auf den Feststoffgehalt der wässrigen Dispersion. Die Zugabe der Trocknungshilfsmittel zu den wässrigen Dispersionen ist an keine besondere Vorgehensweise gebunden und kann auf herkömmliche Weise erfolgen.

Das Trocknen der wässrigen Dispersionen kann beispielsweise mittels Wirbelschichttrocknung, Gefriertrocknung oder Sprühtrocknung erfolgen. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPa·s (Brookfield-Viskosität bei 20 Umdrehungen und 23°C), bevorzugt < 250 mPa·s, erhalten wird. Der Feststoffgehalt der zu verdüsenden Dispersion beträgt vorzugsweise 30 bis 75 Gew.-% und besonders bevorzugt 50 bis 60 Gew.-%.

Vielfach hat sich ein Gehalt von bis zu 1,5 Gew.-% Antischaummittel, bezogen auf das Polymerisat, als günstig erwiesen. Antischaummittel wird vorzugsweise bei der Verdüsung zugegeben.

Zur Erhöhung der Lagerfähigkeit durch Verbesserung der Verblockungsstabilität, insbesondere bei Polymerpulvern mit niedriger Glasübergangstemperatur, kann das erhaltene Polymerpulver beispielsweise mit einem oder mehreren Antiblockmitteln (Antibackmittel) ausgerüstet werden. Die Antiblockmittel werden vorzugsweise nicht den wässerigen Polymerdispersionen, also vorzugsweise nicht vor der Trocknung, sondern vorzugsweise während oder nach der Trocknung, insbesondere während der Trocknung in die Sprühtrocknungsanlage zugegeben. Bevorzugte Polymerpulver enthalten Antiblockmittel, insbesondere 1 bis 30 Gew.-%, bezogen auf das Gesamtgewicht polymerer Bestandteile. Beispiele für Antiblockmittel sind Ca- bzw. Mg-Carbonat, Talk, Gips, Kieselsäure, Kaoline wie Metakaolin, Silicate, vorzugsweise mit Teilchengrößen im Bereich von 10 nm bis 10 µm. Antiblockmittel sind üblicherweise wasserunlöslich.

Die Polymerpulver enthalten vorzugsweise keinen Polyelektrolyten. Polyelektrolyte bezeichnen allgemein Polymerisate mit in wässrigem Medium ionisch dissoziierbaren Gruppen, die Bestandteil oder Substituent der Polymerisatkette sein können. Die Anzahl der ionisch dissoziierbaren Gruppen ist allgemein so groß, dass die Polymerisate in der dissoziierten Form in Wasser vollständig löslich sind. Bei Polyelektrolyte kann es sich beispielsweise um Polysäuren oder Polybasen handeln.

Die Polymerpulver enthalten vorzugsweise keine wasserlöslichen Halogenidsalze, insbesondere keine wasserlöslichen Chloridsalze. Wasserlösliche Halogenidsalze haben eine Wasserlöslichkeit von vorzugsweise ≥ 1 g pro Liter Wasser, unter Normalbedingungen (23/50) nach DIN50014.

Die Polymerpulver enthalten vorzugsweise keine polyfunktionellen Alkohole, insbesondere keine Alkohole, die mindestens eine Alkohol-Gruppe und gegebenenfalls eine oder mehrere weitere funktionelle Gruppen tragen ausgewählt aus der Gruppe umfassend Amin-, Carbaminsäure-, Mercaptan-, Sulfonsäure-, Schwefelsäure-, Halogenid-, Carboxyl-, Alkoxy-, Phosphinsäure-, Phosphonsäure- und Phosphorsäure-Gruppen, wobei die Summe aus der Anzahl der Alkohol-Gruppen und der weiteren funktionellen Gruppen der Alkohole ≥ 2 ist. Die Polymerpulver enthalten vorzugsweise keine Alkohole mit ≤ 20, besonders bevorzugt ≤ 15 Kohlenstoffatomen oder > 2 Kohlenstoffatomen.

Die Polymerpulver enthalten vorzugsweise kein Polyalkylenpolyamin, insbesondere kein Polyethylenimin, insbesondere nicht mit einem Molekulargewicht von 300 bis 10.000.000. Polyalkylenpolyamin basieren allgemein auf Amin-, Ammonium- oder AmidGruppen tragenden, ethylenisch ungesättigen Monomeren und gegebenenfalls weiteren ethylenisch ungesättigen Monomeren.

Die hydraulisch abbindenden Baustofftrockenformulierungen enthalten vorzugsweise 0,1 bis 30 Gew.-%, besonders bevorzugt 0,3 bis 12,0 Gew.-% und am meisten bevorzugt 0,5 bis 5,0 Gew.-% Polymerpulver, jeweils bezogen auf das Gesamtgewicht der hydraulisch abbindenden Baustofftrockenformulierungen.

Geeignete hydraulisch abbindende Bindemittel sind beispielsweise Zemente, insbesondere Portlandzement, Aluminatzement, Trasszement, Hüttenzement, Magnesiazement, Phosphatzement oder Hochofenzement, sowie Mischzemente, Füllzemente, Flugasche, Microsilica, hydraulischer Kalk und Gips. Bevorzugt werden Portlandzement, Aluminatzement und Hüttenzement, sowie Mischzemente, Füllzemente, hydraulischer Kalk und Gips. Bevorzugt sind auch Gemische von zwei oder mehr hydraulisch abbindenden Bindemitteln, die insbesondere Zement und hydraulischen Kalk enthalten.

Im Allgemeinen enthalten die hydraulisch abbindenden Baustofftrockenformulierungen 5 bis 50 Gew.-%, vorzugsweise 10 bis 30 Gew.-%, hydraulisch abbindende Bindemittel, jeweils bezogen auf das Gesamtgewicht der hydraulisch abbindenden Baustofftrockenformulierungen.

Beispiele für geeignete Füllstoffe sind Quarzsand, Quarzmehl, Calciumcarbonat, Dolomit, Aluminiumsilicate, Ton, Kreide, Weißkalkhydrat, Talkum oder Glimmer, oder auch Leichtfüllstoffe wie Bims, Schaumglas, Gasbeton, Perlite, Vermiculite, Carbon-Nano-Tubes (CNT). Es können auch beliebige Gemische der genannten Füllstoffe eingesetzt werden. Bevorzugt werden Quarzsand, Quarzmehl, Calciumcarbonat, Kreide oder Weißkalkhydrat.
Füllstoffe sind allgemein beziehungsweise implizit wasserunlöslich.

Im Allgemeinen enthalten die hydraulisch abbindenden Baustofftrockenformulierungen 30 bis 90 Gew.-%, vorzugsweise 40 bis 85 Gew.-% Füllstoffe, jeweils bezogen auf das Gesamtgewicht der hydraulisch abbindenden Baustofftrockenformulierungen.

Weitere übliche Zusatzstoffe für die hydraulisch abbindenden Baustofftrockenformulierungen sind Verdickungsmittel, beispielsweise Polysaccharide wie Celluloseether und modifizierte Celluloseether, Stärkeether, Guar Gum, Xanthan Gum, Schichtsilikate, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Übliche Zusatzstoffe sind auch Verzögerer, wie Hydroxycarbonsäuren, oder Dicarbonsäuren oder deren Salze, Saccharide, Oxalsäure, Bernsteinsäure, Weinsäure, Gluconsäure, Zitronensäure, Sucrose, Glucose, Fructose, Sorbit, Pentaerythrit. Ein übliches Additiv sind Abbindebeschleuniger beispielsweise Alkali- oder Erdalkalisalze von anorganischen oder organischen Säuren. Darüber hinaus sind noch zu nennen: Hydrophobierungsmittel, Konservierungsmittel, Filmbildehilfsmittel, Dispergiermittel, Schaumstabilisatoren, Entschäumer und Flammschutzmittel (z.B. Aluminiumhydroxid).

Die Zusatzstoffe werden in den dafür üblichen, von der Art des Zusatzstoffes abhängigen, Mengen eingesetzt. Im Allgemeinen liegen die Mengen bei 0,01 bis 10 Gew.-%, jeweils bezogen auf das Gesamtgewicht der hydraulisch abbindenden Baustofftrockenformulierungen.

Die Herstellung der hydraulisch abbindenden Baustofftrockenformulierungen erfolgt im Allgemeinen so, dass ein oder mehrere hydraulisch abbindende Bindemittel, ein oder mehrere Füllstoffe, ein oder mehrere Polymerpulver und gegebenenfalls ein oder mehrere Zusatzstoffe zu einer Trockenmischung vermischt und homogenisiert werden. Das Herstellen der hydraulisch abbindenden Baustofftrockenformulierungen kann in an sich herkömmlicher Weise in herkömmlichen Vorrichtungen erfolgen. Die zur Verarbeitung der hydraulisch abbindenden Baustofftrockenformulierungen erforderliche Wassermenge wird üblicherweise unmittelbar vor der Applikation hinzugefügt.

Die hydraulisch abbindenden Baustofftrockenformulierungen eignen sich beispielsweise zur Herstellung von Armierungsmassen für Wärmedämmverbundsysteme, oder zur Herstellung von Klebemitteln oder Beschichtungsmitteln. Beispiele für Klebemittel sind Klebemittel für Wärmedämmplatten und Schallschutzplatten, Fliesenkleber, und Klebemittel zur Verklebung von Holz und Holzwerkstoffen. Beispiele für Beschichtungsmittel sind Mörtel, Verlaufsmassen, Estriche, Putze.

Die erfindungsgemäß verwendeten Polymerpulver von Vinylacetat-Ethylen- und/oder Styrol-(Meth)Acrylsäureester-Copolymeren sind überraschenderweise besser in Wasser redispergierbar als herkömmliche Polymerpulver. Die verbesserte Redispergierbarkeit der Polymerpulver manifestiert sich beispielsweise in der reduzierten Absitzneigung von wässrigen Redispersionen der Polymerpulver, wie an Hand der Beispiele weiter unten gezeigt. Die verbesserte Redispergierbarkeit kommt direkt nach der Trocknung, insbesondere nach längerer Lagerdauer, beim Lagern bei höheren Temperaturen oder höherer Luftfeuchtigkeit, also allgemein auch beim Lagern unter feuchten, warmen oder gar feuchtwarmen, wie tropischen Bedingungen, zum Tragen. Dieser Effekt wird insbesondere bewirkt durch die eingesetzten wasserlöslichen Salze. Auch die eingesetzten Trocknungshilfsmittel tragen hierzu bei.

Vorteilhafterweise lassen sich die erfindungsgemäß verwendeten Polymerpulver leichter und damit auch schneller redispergieren.

Die erfindungsgemäß verwendeten Polymerpulver ergeben nach Applikation in hydraulisch abbindenden Baustofftrockenformulierungen schließlich ausgehärtete Bauprodukte mit vorteilhaften mechanischen Eigenschaften, wie beispielsweise Haftzugfestigkeit, Biegezugfestigkeit oder Flexibilität, sowie zeigen auch ein hohes Adhäsionsvermögen auf Untergründen. Die nachfolgenden Beispiele dienen zur weiteren Erläuterung der Erfindung.

### Beispiel 1:

Herstellung der Polymerpulver:
Eine mit 10 Gew.-% Polyvinylalkohol (Hydrolysegrad: 88 Mol-%, Höpplerviskosität: 4 mPas in 4%-iger wässriger Lösung) stabilisierte, wässrige Dispersion eines Vinylacetat-Ethylen-Copolymers (Glasübergangstemperatur Tg: 17°C) wurde mit
2,0 Gew.-%, bezogen auf den Polymergehalt der Dispersion (fest/fest), eines teilverseiften Polyvinylalkohols (Hydrolysegrad: 88 Mol-%; Höpplerviskosität: 4 mPas in 4%-iger wässriger Lösung) und
6,0 Gew.-%, bezogen auf den Polymergehalt der Dispersion (fest/fest), eines teilverseiften Polyvinylalkohols (Hydrolysegrad: 88 Mol-%; Höpplerviskosität: 13 mPas in 4%-iger wässriger Lösung) sowie
entsprechend der jeweiligen Angabe in Tabelle 1 mit Natriumsulfat (Na₂SO₄) versetzt und
durch Sprühtrocknung in an sich herkömmlicher Weise bei einer Eintrittstemperatur von 130°C und einer Austrittstemperatur von 80°C getrocknet, wodurch ein redispergierbares Polymerpulver erhalten wurde. Dem Polymerpulver wurden 4 Gew.-% Kaolin und 16 Gew.-% Calciumcarbonat als Antibackmittel zugegeben.

Bestimmung des Absitzverhaltens (RA) des Polymerpulvers:
Das Absitzverhalten der wässrigen Redispersion des Polymerpulvers dient als Maß für die Redispergierbarkeit und damit der Lagerstabilität des Polymerpulvers.
Das jeweilige, in Beispiel 1 erhaltene Polymerpulver wurde durch Zugabe von Wasser unter Einwirkung von starken Scherkräften in eine wässrige Redispersion mit einem Feststoffgehalt von 50% überführt.
Das Absitzverhalten wurde bestimmt, indem die wässrige Redispersion mit Wasser auf einen Festgehalt von 0,5% verdünnt wurde und 100 ml dieser Dispersion in eine graduierte Röhre gefüllt und die Absitzhöhe an Feststoff gemessen wurde. Die Angabe erfolgt in cm Absitz nach 24 Stunden. Je geringer der Röhrenabsitz-Wert, desto niedriger der Grobanteil der Redispersion und desto höher der Feinanteil und desto besser die Redispergierbarkeit und Lagerstabilität des Polymerpulvers. Die erhaltenen Werte für das Absitzverhalten (RA) sind in Tabelle 1 aufgelistet.

**Tabelle 1: Na₂SO₄-Gehalt der Polymerpulver sowie Austestungsergebnis des Absitzverhaltens (RA):**

| | Na₂SO₄-Gehalt des Polymerpulvers [Gew.-%]^{a)} | Absitzverhalten [cm] |
|---|---|---|
| Vergleichspolymerpulver 1 | 0 | 1,4 |
| Polymerpulver 2 | 1 | 0, 9 |
| Polymerpulver 3 | 2 | 0, 6 |

| | | |
|---|---|---|
| a) Gew.-% Na₂SO₄, bezogen auf den Polymergehalt der Dispersion (fest/fest) | | |

Zum Vergleich wurde das Absitzverhalten (RA) der (Vergleichs)-Polymerpulver 1 bis 3 wie oben beschrieben bestimmt, mit dem Unterschied, dass das jeweilige Polymerpulver nicht in Wasser, sondern in Na₂SO₄-haltigem Wasser redispergiert wurde. Der Na₂SO₄-Gehalt des Na₂SO₄-haltigen Wassers wurde für das jeweilige Polymerpulver so eingestellt, dass für jede Redispersion eine Na₂SO₄-Gesamtkonzentration von 0,015 Gew.-% erhalten wurde. Die so erhaltenen Werte für das Absitzverhalten (RA) sind in Tabelle 2 aufgeführt.

**Tabelle 2: Austestungsergebnis des Absitzverhaltens (RA):**

| | Absitzverhalten [cm] |
|---|---|
| Vergleichspolymerpulver 1 | 1,7 |
| Polymerpulver 2 | 1,1 |
| Polymerpulver 3 | 0,7 |

Die Austestungsergebnisse der Tabellen 1 und 2 zeigen, dass die Zugabe von Natriumsulfat zur Redispersion das Absitzverhalten verschlechtern.

Überraschenderweise wurde durch Einbringen von Natriumsulfat in die Polymerpulver das Absitzverhalten und damit die Redispergierbarkeit und Lagerstabilität der Polymerpulver verbessert, wie aus Tabelle 1 hervorgeht.

### Vergleichsbeispiel 2:

Vergleichsbeispiel 2 wurde identisch ausgeführt wie Beispiel 1, mit dem einzigen Unterschied, dass der wässrigen Dispersion an Stelle von Natriumsulfat jeweils die in der Tabelle 3 angegebene Menge an Natriumcarbonat (Na₂CO₃) zugesetzt wurde.

Die Austestungsergebnisse für das Absitzverhalten (RA) sind auch in Tabelle 3 angegeben.

**Tabelle 3: Na₂CO₃-Gehalt der Polymerpulver sowie Austestungsergebnis des Absitzverhaltens (RA):**

| | Na₂CO₃-Gehalt des Polymerpulvers [Gew.-%]^{a)} | Absitzverhalten [cm] |
|---|---|---|
| Vergleichspolymerpulver 4 | 0 | 1,4 |
| Vergleichspolymerpulver 5 | 1 | 1,1 |
| Vergleichspolymerpulver 6 | 2 | 1,3 |

| | | |
|---|---|---|
| a) Gew.-% Na₂CO₃, bezogen auf den Polymergehalt der Dispersion (fest/fest) | | |

### Beispiel 3:

Beispiel 3 wurde identisch ausgeführt wie Beispiel 1, mit dem einzigen Unterschied, dass das Vinylacetat-Ethylen-Copolymer eine Glasübergangstemperatur Tg von -15 °C hatte.

Die Austestungsergebnisse für das Absitzverhalten (RA) sind auch in Tabelle 4 angegeben.

**Tabelle 4: Na₂SO₄-Gehalt der Polymerpulver sowie Austestungsergebnis des Absitzverhaltens (RA):**

| | Na₂SO₄-Gehalt des Polymerpulvers [Gew.-%]^{a)} | Absitzverhalten [cm] |
|---|---|---|
| Vergleichspolymerpulver 7 | 0 | 2, 0 |
| Polymerpulver 8 | 1 | 1,1 |
| Polymerpulver 9 | 2 | 1, 0 |

| | | |
|---|---|---|
| a) Gew.-% Na₂SO₄, bezogen auf den Polymergehalt der Dispersion (fest/fest) | | |

Die Polymerpulver aus Beispiel 3 wurden zudem für zwei Wochen offen bei 35°C und 75% Luftfeuchtigkeit gelagert. Anschließend wurde das Absitzverhalten (RA) bestimmt, wie für Beispiel 1 beschrieben. Die Austestungsergebnisse sind in Tabelle 5 angegeben.

**Tabelle 5: Na₂SO₄-Gehalt der Polymerpulver sowie Austestungsergebnis des Absitzverhaltens (RA):**

| | Na₂SO₄-Gehalt des Polymerpulvers [Gew.-%]^{a)} | Absitzverhalten [cm] |
|---|---|---|
| Vergleichspolymerpulver 7 | 0 | 3,8 |
| Polymerpulver 8 | 1 | 2,4 |
| Polymerpulver 9 | 2 | 1,8 |

| | | |
|---|---|---|
| a) Gew.-% Na₂SO₄, bezogen auf den Polymergehalt der Dispersion (fest/fest) | | |

### Beispiel 4:

Beispiel 4 wurde identisch ausgeführt wie Beispiel 1, mit dem einzigen Unterschied, dass an Stelle des Vinylacetat-EthylenCopolymers ein Styrol-n-Butylacrylat-Copolymer mit einer Glasübergangstemperatur Tg von 20 °C eingesetzt wurde.

Die Austestungsergebnisse für das Absitzverhalten (RA) sind auch in Tabelle 5 angegeben.

**Tabelle 5: Na₂SO₄-Gehalt der Polymerpulver sowie Austestungsergebnis des Absitzverhaltens (RA):**

| | Na₂SO₄-Gehalt des Polymerpulvers [Gew.-%]^{a)} | Absitzverhalten [cm] |
|---|---|---|
| Vergleichspolymerpulver 10 | 0 | 2,7 |
| Polymerpulver 11 | 1 | 1, 8 |
| Polymerpulver 12 | 2 | 1,4 |

| | | |
|---|---|---|
| a) Gew.-% Na₂SO₄, bezogen auf den Polymergehalt der Dispersion (fest/fest) | | |

Die Beispiele 1, 3 und 4 zeigen, dass der Einsatz des wasserlöslichen Salzes Natriumsulfat eine deutliche Reduktion des Röhrenabsitzes und damit eine Verbesserung der Redispergierbarkeit und Lagerstabilität des Polymerpulvers bewirkt.

Dies gilt sowohl direkt nach der Sprühtrocknung als auch nach Wärme- und Feuchtlagerung, wie Beispiel 3 belegt.

Dagegen wurde durch entsprechenden Zusatz von Natriumcarbonat die Redispergierbarkeit nicht signifikant verbessert (Vergleichsbeispiel 2). Die für Vergleichsbeispiel 2 festgestellten Unterschiede im Absitzverhalten liegen im Bereich des Mesfehlers (+/-0,2). Die Steigerung des Natriumcarbonat-Gehalts von 1 Gew.-% in Vergleichspolymerpulver 5 auf 2 Gew.-% in Vergleichspolymerpulver 6 führte sogar zu einer Verschlechterung des Absitzverhaltens.

Herstellung von Baustofftrockenformulierungen:
Mit erhaltenen Polymerpulvern wurden folgende Mörteltrockenformulierungen hergestellt. Die Mörteltrockenformulierungen wurden auf herkömmliche Weise hergestellt und appliziert.

Fließenkleber mit niedrigem Polymerpulvergehalt:
Quarzsand 577 Teile,
Portlandzement 400 Teile,
Cellulose 3 Teile,
Polymerpulver 20 Teile.

Fließenkleber mit mittlerem Polymerpulvergehalt:
Quarzsand 444 Teile,
Calciumcarbonat 80 Teile,
Portlandzement 350 Teile,
Aluminatzement 70 Teile,
Verzögerer 2 Teile,
Cellulose 4 Teile,
Polymerpulver 60 Teile.
flexibler Dichtschlamm mit hohem Polymerpulvergehalt:
Quarzsand 300 Teile,
Calciumcarbonat 134 Teile,
Portlandzement 130 Teile,
Aluminatzement 70 Teile,
Leichtfüllstoff 50 Teile,
hochdisperse Kieselsäure 5 Teile,
Fasern 5 Teile,
Verzögerer 1 Teil,
Assoziativ Verdicker 5 Teile,
Polymerpulver 300 Teile.

Die verbesserte Redispergierbarkeit der verwendeten Polymerpulver macht entsprechende Bauprodukte mit höheren Biegezugfestigkeiten und erhöhter Flexibilität zugänglich.

## Patentansprüche

1. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen, **dadurch gekennzeichnet, dass**
die Lagerstabilität der Schutzkolloid stabilisierten Vinylacetat-Ethylen- oder Styrol-(Meth)Acrylsäureester-Copolymere in Form von in Wasser redispergierbaren Pulvern verbessert wird,
indem wässrige Dispersionen enthaltend Schutzkolloid stabilisierte Vinylacetat-Ethylen- und/oder Styrol-(Meth)-Acrylsäureester-Copolymere, ein oder mehrere wasserlösliche, anorganische Salze und ein oder mehrere Trocknungshilfsmittel getrocknet werden,
wobei die wasserlöslichen, anorganischen Salze ausgewählt werden aus der Gruppe bestehend aus Alkalisulfaten und die Trocknungshilfsmittel ausgewählt werden aus der Gruppe umfassend Polyvinylalkohole, Polyvinylacetale, nicht-ionische Polyvinylpyrrolidone, nicht-ionische Poly(meth)acrylamide, Polysaccharide und Proteine.

2. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1, **dadurch gekennzeichnet, dass** die wasserlöslichen, anorganischen Salze ausgewählt werden aus der Gruppe bestehend aus Lithiumsulfat, Natriumsulfat und Kaliumsulfat.

3. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1, **dadurch gekennzeichnet, dass** als wasserlösliches, anorganisches Salz Natriumsulfat eingesetzt wird.

4. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 3, **dadurch gekennzeichnet, dass** die wässrigen Dispersionen oder die in Wasser redispergierbaren Pulver 0,1 bis 20 Gew.-% an wasserlöslichen, anorganischen Salzen enthalten, bezogen auf das Gesamtgewicht der Vinylacetat-Ethylen- und Styrol-(Meth)Acrylsäureester-Copolymere.

5. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 4, **dadurch gekennzeichnet, dass** die wässrigen Dispersionen oder die in Wasser redispergierbaren Pulver 0,1 bis 4 Gew.-% an wasserlöslichen, anorganischen Salzen enthalten, bezogen auf das Gesamtgewicht der Vinylacetat-Ethylen- und Styrol-(Meth)Acrylsäureester-Copolymere.

6. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 5, **dadurch gekennzeichnet, dass** die Trocknungshilfsmittel ausgewählt werden aus der Gruppe bestehend aus Polyvinylalkoholen, Polyvinylacetalen, nicht-ionischen Polyvinylpyrrolidonen, nicht-ionischen Poly(meth)acrylamiden und Proteinen.

7. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 6, **dadurch gekennzeichnet, dass** es sich bei den Schutzkolloiden und den Trocknungshilfsmitteln um Polyvinylalkohole handelt.

8. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 7, **dadurch gekennzeichnet, dass** ein oder mehrere Vinylacetat-Ethylen-Copolymere ausgewählt werden aus der Gruppe umfassend Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 3 bis 12 C-Atomen im Carbonsäurerest; Mischpolymerisate von Vinylacetat, 1 bis 40 Gew.-% Ethylen und 1 bis 60 Gew.-% Acrylsäureester von unverzweigten oder verzweigten Alkoholen mit 1 bis 15 C-Atomen; Mischpolymerisate mit 30 bis 75 Gew.-% Vinylacetat, 1 bis 40 Gew.-% Ethylen, 1 bis 30 Gew.-% Vinyllaurat oder Vinylester einer alpha-verzweigten Carbonsäure mit 5 bis 13 C-Atomen, sowie 1 bis 30 Gew.-% Acrylsäureester von unverzweigten oder verzweigten Alkoholen mit 1 bis 15 C-Atomen; und Mischpolymerisate mit Vinylacetat, 1 bis 40 Gew.-% Ethylen und 1 bis 60 Gew.-% Vinylchlorid; wobei sich die Angaben in Gew.-% auf jeweils 100 Gew.-% aufaddieren.

9. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 8, **dadurch gekennzeichnet, dass** die Styrol-(Meth)Acrylsäureester-Copolymerisate auf Styrol und einem oder mehreren Monomeren aus der Gruppe umfassend Methylmethacrylat, Methylacrylat, Ethylacrylat, Propylacrylat, n-Butylacrylat, 2-Ethylhexylacrylat basieren.

10. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 9, **dadurch gekennzeichnet, dass** die Vinylacetat-Ethylen- oder Styrol-(Meth)Acrylsäureester-Copolymere mittels radikalisch initiierter Emulsionspolymerisation hergestellt werden und ein oder mehrere wasserlösliche, anorganische Salze vor oder während der Emulsionspolymerisation zugegeben werden.

11. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 10, **dadurch gekennzeichnet, dass** die Vinylacetat-Ethylen- oder Styrol-(Meth)Acrylsäureester-Copolymere mittels radikalisch initiierter Emulsionspolymerisation hergestellt werden und ein oder mehrere wasserlösliche, anorganische Salze nach der Emulsionspolymerisation und vor der Trocknung der wässrigen Dispersionen zugegeben werden.

12. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 11, **dadurch gekennzeichnet, dass** Vinylacetat-Ethylen- und/oder Styrol-(Meth)Acrylsäureester-Copolymeren in Form von in Wasser redispergierbaren Pulvern kein Polyalkylenpolyamin enthalten.

13. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 12, **dadurch gekennzeichnet, dass** die hydraulisch abbindenden Baustofftrockenformulierungen 5 bis 50 Gew.-% an hydraulisch abbindenden Bindemitteln enthalten, bezogen auf das Gesamtgewicht der hydraulisch abbindenden Baustofftrockenformulierungen.

14. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 13, **dadurch gekennzeichnet, dass** die hydraulisch abbindenden Baustofftrockenformulierungen als Armierungsmassen für Wärmedämmverbundsysteme, als Klebemittel für Wärmedämmplatten oder Schallschutzplatten, als Fliesenkleber, oder als Mörtel, Verlaufsmassen, Estriche oder Putze eingesetzt werden.

15. Verwendung von Vinylacetat-Ethylen- und/oder Styrol-(Meth)Acrylsäureester-Copolymeren in Form von in Wasser redispergierbaren Pulvern zur Herstellung von hydraulisch abbindenden Baustofftrockenformulierungen gemäß Anspruch 1 bis 14, **dadurch gekennzeichnet, dass** die Vinylacetat-Ethylen- und/oder Styrol-(Meth)Acrylsäureester-Copolymere in Form von in Wasser redispergierbaren Pulvern 1 bis 30 Gew.-% an Trocknungshilfsmitteln enthalten, bezogen auf das Gesamtgewicht der Copolymere.

## Claims

1. Use of vinyl acetate-ethylene and/or styrene-(meth)acrylic ester copolymers in the form of water-redispersible powders for producing hydraulically setting dry building material formulations, **characterized in that**
the storage stability of the protective-colloidstabilized vinyl acetate-ethylene or styrene-(meth)acrylic ester copolymers in the form of water-redispersible powders is improved
by drying aqueous dispersions comprising protective-colloid-stabilized vinyl acetate-ethylene and/or styrene-(meth)acrylic ester copolymers, one or more water-soluble inorganic salts, and one or more desiccants,
the water-soluble inorganic salts being selected from the group consisting of alkali metal sulfates, and the desiccants being selected from the group comprising polyvinyl alcohols, polyvinyl acetals, nonionic polyvinylpyrrolidones, nonionic poly(meth)acrylamides, polysaccharides, and proteins.

2. Use of vinyl acetate-ethylene and/or styrene-(meth)acrylic ester copolymers in the form of water-redispersible powders for producing hydraulically setting dry building material formulations according to Claim 1, **characterized in that** the water-soluble inorganic salts are selected from the group consisting of lithium sulfate, sodium sulfate, and potassium sulfate.

3. Use of vinyl acetate-ethylene and/or styrene-(meth)acrylic ester copolymers in the form of water-redispersible powders for producing hydraulically setting dry building material formulations according to Claim 1, **characterized in that** sodium sulfate is used in the form of the water-soluble inorganic salt.

4. Use of vinyl acetate-ethylene and/or styrene-(meth)acrylic ester copolymers in the form of water-redispersible powders for producing hydraulically setting dry building material formulations according to Claims 1 to 3, **characterized in that** the aqueous dispersions or the water-redispersible powders contain 0.1% to 20% by weight of water-soluble inorganic salts based on the total weight of the vinyl acetate-ethylene and styrene-(meth)acrylic ester copolymers.

5. Use of vinyl acetate-ethylene and/or styrene-(meth)acrylic ester copolymers in the form of water-redispersible powders for producing hydraulically setting dry building material formulations according to Claims 1 to 4, **characterized in that** the aqueous dispersions or the water-redispersible powders contain 0.1% to 4% by weight of water-soluble inorganic salts based on the total weight of the vinyl acetate-ethylene and styrene-(meth)acrylic ester copolymers.

6. Use of vinyl acetate-ethylene and/or styrene-(meth)acrylic ester copolymers in the form of water-redispersible powders for producing hydraulically setting dry building material formulations according to Claims 1 to 5, **characterized in that** the desiccants are selected from the group consisting of polyvinyl alcohols, polyvinyl acetals, nonionic polyvinylpyrrolidones, nonionic poly(meth)acrylamides and proteins.

7. Use of vinyl acetate-ethylene and/or styrene-(meth)acrylic ester copolymers in the form of water-redispersible powders for producing hydraulically setting dry building material formulations according to Claims 1 to 6, **characterized in that** the protective colloids and the desiccants are polyvinyl alcohols.

8. Use of vinyl acetate-ethylene and/or styrene-(meth)acrylic ester copolymers in the form of water-redispersible powders for producing hydraulically setting dry building material formulations according to Claims 1 to 7, **characterized in that** one or more vinyl acetate-ethylene copolymers are selected from the group comprising copolymers of vinyl acetate with 1% to 40% by weight of ethylene; copolymers of vinyl acetate with 1% to 40% by weight of ethylene and 1% to 50% by weight of one or more further comonomers from the group of vinyl esters having 3 to 12 carbon atoms in the carboxyl radical; copolymers of vinyl acetate, 1% to 40% by weight of ethylene, and 1% to 60% by weight of acrylic esters of unbranched or branched alcohols having 1 to 15 carbon atoms; copolymers with 30% to 75% by weight of vinyl acetate, 1% to 40% by weight of ethylene, 1% to 30% by weight of vinyl laurate or vinyl esters of an alphabranched carboxylic acid having 5 to 13 carbon atoms, and also 1% to 30% by weight of acrylic esters of unbranched or branched alcohols having 1 to 15 carbon atoms; and copolymers with vinyl acetate, 1% to 40% by weight of ethylene, and 1% to 60% by weight of vinyl chloride; where the percentages by weight add up to 100% by weight in each case.

9. Use of vinyl acetate-ethylene and/or styrene-(meth)acrylic ester copolymers in the form of water-redispersible powders for producing hydraulically setting dry building material formulations according to Claims 1 to 8, **characterized in that** the styrene-(meth)acrylic ester copolymers are based on styrene and one or more monomers from the group comprising methyl methacrylate, methyl acrylate, ethyl acrylate, propyl acrylate, n-butyl acrylate, 2-ethylhexyl acrylate.

10. Use of vinyl acetate-ethylene and/or styrene-(meth)acrylic ester copolymers in the form of water-redispersible powders for producing hydraulically setting dry building material formulations according to Claims 1 to 9, **characterized in that** the vinyl acetate-ethylene or styrene-(meth)acrylic ester copolymers are produced by free-radically initiated emulsion polymerization and one or more water-soluble inorganic salts are added before or during the emulsion polymerization.

11. Use of vinyl acetate-ethylene and/or styrene-(meth)acrylic ester copolymers in the form of water-redispersible powders for producing hydraulically setting dry building material formulations according to Claims 1 to 10, **characterized in that** the vinyl acetate-ethylene or styrene-(meth)acrylic ester copolymers are produced by free-radically initiated emulsion polymerization and one or more water-soluble inorganic salts are added after the emulsion polymerization and before the drying of the aqueous dispersions.

12. Use of vinyl acetate-ethylene and/or styrene-(meth)acrylic ester copolymers in the form of water-redispersible powders for producing hydraulically setting dry building material formulations according to Claims 1 to 11, **characterized in that** vinyl acetate-ethylene and/or styrene-(meth)acrylic ester copolymers in the form of water-redispersible powders contain no polyalkylene polyamine.

13. Use of vinyl acetate-ethylene and/or styrene-(meth)acrylic ester copolymers in the form of water-redispersible powders for producing hydraulically setting dry building material formulations according to Claims 1 to 12, **characterized in that** the hydraulically setting dry building material formulations contain 5% to 50% by weight of hydraulically setting binders based on the total weight of the hydraulically setting dry building material formulations.

14. Use of vinyl acetate-ethylene and/or styrene-(meth)acrylic ester copolymers in the form of water-redispersible powders for producing hydraulically setting dry building material formulations according to Claims 1 to 13, **characterized in that** the hydraulically setting dry building material formulations are used as reinforcing compounds for thermal insulation composite systems, as adhesives for thermal insulation panels or soundproofing panels, as tile adhesives, or as mortars, self-levelling compounds, screeds or plasters.

15. Use of vinyl acetate-ethylene and/or styrene-(meth)acrylic ester copolymers in the form of water-redispersible powders for producing hydraulically setting dry building material formulations according to Claims 1 to 14, **characterized in that** the vinyl acetate-ethylene and/or styrene-(meth)acrylic ester copolymers in the form of water-redispersible powders contain 1% to 30% by weight of desiccants based on the total weight of the copolymers.

## Revendications

1. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique, **caractérisée en ce que** la stabilité au stockage des copolymères d'acétate de vinyle-éthylène ou de styrène-ester d'acide (méth)acrylique stabilisés par colloïde protecteur, sous forme de poudres redispersables dans l'eau, est améliorée en séchant des dispersions aqueuses contenant des copolymères d'acétate de vinyle-éthylène et/ou de styrène-ester d'acide (méth)acrylique stabilisés par colloïde protecteur, un ou plusieurs sels inorganiques hydrosolubles et un ou plusieurs adjuvants de séchage, les sels inorganiques hydrosolubles étant choisis dans le groupe constitué par les sulfates alcalins, et les adjuvants de séchage étant choisis dans le groupe comprenant les poly(alcool vinylique)s, les polyvinylacétals, les polyvinylpyrrolidones non ioniques, les poly(méth)acrylamides non ioniques, les polysaccharides et les protéines.

2. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon la revendication 1, **caractérisée en ce que** les sels inorganiques hydrosolubles sont choisis dans le groupe constitué par le sulfate de lithium, le sulfate de sodium et le sulfate de potassium.

3. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon la revendication 1, **caractérisée en ce que** du sulfate de sodium est utilisé en tant que sel inorganique hydrosoluble.

4. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 3, **caractérisée en ce que** les dispersions aqueuses ou les poudres redispersables dans l'eau contiennent 0,1 à 20 % en poids de sels inorganiques hydrosolubles, par rapport au poids total des copolymères d'acétate de vinyle-éthylène et de styrène-ester d'acide (méth)acrylique.

5. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 4, **caractérisée en ce que** les dispersions aqueuses ou les poudres redispersables dans l'eau contiennent 0,1 à 4 % en poids de sels inorganiques hydrosolubles, par rapport au poids total des copolymères d'acétate de vinyle-éthylène et de styrène-ester d'acide (méth)acrylique.

6. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 5, **caractérisée en ce que** les adjuvants de séchage sont choisis dans le groupe constitué par les poly(alcool vinylique)s, les polyvinylacétals, les polyvinylpyrrolidones non ioniques, les poly(méth)acrylamides non ioniques et les protéines

7. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 6, **caractérisée en ce que** pour ce qui est des colloïdes protecteurs et des adjuvants de séchage il s'agit de poly(alcool vinylique)s.

8. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 7, **caractérisée en ce qu'**un ou plusieurs copolymères d'acétate de vinyle-éthylène sont choisis dans le groupe comprenant les copolymères d'acétate de vinyle comportant 1 à 40 % en poids d'éthylène ; les copolymères d'acétate de vinyle comportant 1 à 40 % en poids d'éthylène et 1 à 50 % en poids d'un ou de plusieurs autres comonomères choisis dans le groupe des esters vinyliques ayant de 3 à 12 atomes de carbone dans le radical acide carboxylique ; les copolymères d'acétate de vinyle, 1 à 40 % en poids d'éthylène et 1 à 60 % en poids d'esters d'acide acrylique avec des alcools ramifiés ou non ramifiés ayant de 1 à 15 atomes de carbone ; les copolymères comportant 30 à 75 % en poids d'acétate de vinyle, 1 à 40 % en poids d'éthylène, 1 à 30 % en poids de laurate de vinyle ou d'ester vinylique d'un acide carboxylique ramifié en alpha ayant de 5 à 13 atomes de carbone, ainsi que 1 à 30 % en poids d'esters d'acide acrylique avec des alcools ramifiés ou non ramifiés ayant de 1 à 15 atomes de carbone ; et les copolymères d'acétate de vinyle, de 1 à 40 % en poids d'éthylène et de 1 à 60 % en poids de chlorure de vinyle ; la somme des données en % en poids étant chaque fois égale à 100 % en poids.

9. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 8, **caractérisée en ce que** les copolymères de styrène-ester d'acide (méth)acrylique sont à base de styrène et d'un ou de plusieurs monomères choisis dans le groupe comprenant le méthacrylate de méthyle, l'acrylate de méthyle, l'acrylate d'éthyle, l'acrylate de propyle, l'acrylate de n-butyle et l'acrylate de 2-éthylhexyle.

10. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 9, **caractérisée en ce que** les copolymères d'acétate de vinyle-éthylène ou de styrène-ester d'acide (méth)acrylique sont préparés par polymérisation en émulsion à amorçage radicalaire et un ou plusieurs sels inorganiques hydrosolubles sont ajoutés avant ou pendant la polymérisation en émulsion.

11. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 10, **caractérisée en ce que** les copolymères d'acétate de vinyle-éthylène ou de styrène-ester d'acide (méth)acrylique sont préparés par polymérisation en émulsion à amorçage radicalaire et un ou plusieurs sels inorganiques hydrosolubles sont ajoutés après la polymérisation en émulsion et avant le séchage des dispersions aqueuses.

12. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 11, **caractérisée en ce que** les copolymères d'acétate de vinyle-éthylène et/ou de styrène-ester d'acide (méth)acrylique sous forme de poudres redispersables dans l'eau ne contiennent pas de polyalkylènepolyamine.

13. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 12, **caractérisée en ce que** les formulations sèches de matériaux de construction à prise hydraulique contiennent de 5 à 50 % en poids de liants à prise hydraulique, par rapport au poids total des formulations sèches de matériaux de construction à prise hydraulique.

14. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 13, **caractérisée en ce que** les formulations sèches de matériaux de construction à prise hydraulique sont utilisées comme masses d'armature pour systèmes composites d'isolation thermique, comme colles pour panneaux d'isolation thermique ou panneaux d'isolation phonique, comme colles à carrelage, ou comme mortiers, masses de nivellement, chapes ou enduits.

15. Utilisation de copolymères d'acétate de vinyle-éthylène et/ou de styrène-ester d'acide (méth)acrylique sous forme de poudres redispersables dans l'eau pour la production de formulations sèches de matériaux de construction à prise hydraulique selon l'une quelconque des revendications 1 à 14, **caractérisée en ce que** les copolymères d'acétate de vinyle-éthylène et/ou de styrène-ester d'acide (méth)acrylique sous forme de poudres redispersables dans l'eau contiennent 1 à 30 % en poids d'adjuvants de séchage, par rapport au poids total des copolymères.
